# EUROPEAN PATENT SPECIFICATION

(11) **EP 2 680 990 B1**
(45) Date of publication and mention of the grant of the patent: **04.01.2017**
(21) Application number: 11860002.2
(22) Date of filing: 29.11.2011
(51) Int. Cl.: B22D 11/128, B21B 39/00

(54) **METHOD FOR EXTENDING THE SERVICE LIFE OF A ROLL LINE**
VERFAHREN ZUR VERLÄNGERUNG DER LEBENSDAUER EINER WALZLINIE
PROCÉDÉ POUR ALLONGER LA DURÉE DE VIE D'UNE LIGNE DE LAMINAGE

(30) Priority: 01.03.2011 SE 1100141
(43) Date of publication of application: 08.01.2014
(73) Proprietor: Aktiebolaget SKF, 415 50 Göteborg (SE)
(72) Inventor: MITCHELL. Erik, S-436 51 Hovås (SE); ANUNDSSON, Jesper, S-437 41 Lindome (SE); COSTA, Patrik, S-446 97 Älvängen (SE); IPPOLITO, Cosimo, I-10064 Pinerolo (IT); ZANELLA, Vittorio, I-10043 Orbassano (IT)
(74) Representative: Gentzel, Marcus
(86) International application number: PCT/SE2011/000216
(87) International publication number: WO 2012/118413

(56) References cited:
- WO-A1-2005/016578
- WO-A1-2010/005354
- DE-A1- 1 802 869
- GB-A- 1 463 523
- US-A- 3 890 016
- US-A- 4 577 674

## Description

### TECHNICAL FIELD

The present invention concerns a method for extending the service life of a roll line used in a continuous casting process according to claim 1 or alternatively according to claim 2 and a method for exchanging at least one roll line in a continuous casting process.

Further specifications of the invention are outlined in the dependent claims.

### BACKGROUND OF THE INVENTION

In the continuous casting process molten metal flows from a ladle, through a tundish into a mould having water-cooled walls. Once in the mould, the molten metal solidifies against the water-cooled mould walls to form a solid shell. This shell containing the liquid metal, now called a strand, is withdrawn continuously from the bottom of the mould. The strand is supported by closely spaced, water-cooled roll lines which act to support the walls of the strand against the ferrostatic pressure of the still-solidifying liquid within the strand. To increase the rate of solidification, the strand is sprayed with large amounts of water. Finally, the strand is cut into predetermined lengths. The strand may then continue through additional roll lines and other mechanisms which flatten, roll or extrude the metal produce into its final shape.

The roll lines used in continuous casting plants are subjected to extreme wear due to the high loads, high temperatures, high temperature variations, high humidity, high corrosion and high contamination to which they are subjected during use. Their service life is relatively short compared with other components used in a continuous casting plant. For this reason the roll lines have to be exchanged for new roll lines or overhauled roll lines frequently. If the roll lines fail, they have to be substituted within the shortest possible time so that down time of the continuous casting plant is minimized. The roll lines are relatively large and heavy, and exchanging them is difficult and time consuming.

DE 1802869 discloses a method used for mounting a metallic cylindrical ring on a shaft. The shaft's worn diameter is turned down. A pre-heated cylinder ring is heated to about 100-500 °C and placed around a preferably vertical turned shaft. The gap between the inner surface of the cylinder ring and the outer surface of the shaft is filled with molten metal having a lower melting temperature than the metal constituting the cylindrical ring and shaft. On cooling the shrinkage forces are redistributed through the soft metal filling (e.g. bearing metal).

WO 2005/016578 relates to an internally cooled billet guiding roller, preferably for a continuous casting installation, comprising a central rotary shaft and at least one roller tube which is supported on the shaft in a rotationally fixed manner. The aim of the invention disclosed in this prior art document is to ensure that the billet guiding roller is better able to bear mechanical and thermal stresses, is suitable for wide billets, and can be maintained in a cost-efficient manner. To this end, coolant channels pass through the roller tube, the coolant channels being arranged in the roller tube, at a constant distance from the outer surface thereof. Preferably, at least one water diffuser ring is arranged between the roller tube and the central shaft.

### SUMMARY OF THE INVENTION

An object of the invention is to provide a method for extending the service life of a roll line used in continuous casting, i.e. a shaft having an outer diameter and at least one roll mantle having a corresponding inner diameter arranged to be supported on the shaft. The roll line, when in use, may comprise a rotating shaft and at least one roll mantle fixedly supported on the shaft. Alternatively the roll line, when in use, may comprise a non-rotating shaft and at least one roll mantle rotatably supported on the shaft.

This object is achieved by a method comprising the steps of reducing the outer diameter of the shaft using a lathe and/or increasing the inner diameter of the at least one roll mantle using a lathe when the outer surface of shaft and/or the inner surface of the at least one roll mantle is/are worn, and re-using the shaft of reduced outer diameter and/or the at least one roll mantle of increased inner diameter with at least one new or recycled roll mantle of corresponding inner diameter and/or a new or recycled shaft of corresponding outer diameter respectively. Alternatively, the shaft of reduced outer diameter and/or the at least one roll mantle of increased inner diameter may be re-used together with at least one component inserted therebetween, or with at least one roll mantle and/or a shaft respectively with at least one component inserted therebetween, i.e. at least one component may be used to compensate for the reduced outer diameter of the shaft and/or the increased inner diameter of the at least one roll mantle.

Such a method allows at least part of a roll line, i.e. a shaft and/or at least one roll mantle to be re-used in a continuous casting plant at least once, which thereby extends the service life of at least part of the roll line.

The expression "corresponding" as used in this document is intended to mean a desired degree of fit between components. For example, the expression "corresponding inner diameter" is intended to mean that the inner diameter of a mantle is arranged to have the desired degree of fit with a shaft. This desired degree of fit may be achieved by machining a component within a certain tolerance to enable the component to be mounted directly, on a shaft for example, or by treating a machined component in an appropriate way, for example by heating a mantle having a particular inner diameter so that it can then be mounted on a shaft.

The expression "when worn" as used in this document is not intended to mean that at least part of a roll line should only be replaced when it is at least partly worn. It is intended to mean that a roll line may be subjected to the method according to the present invention at any time deemed suitable by an operator of a continuous casting plant or a wear-monitoring sensor for whatever reason.

It should be noted that the outer surface of at least one roll mantle may also be treated (by removing any rust/dirt from its surface for example) before the at least one roll mantle is re-used.

According to an embodiment of the invention the method comprises the step of at least partly coating the outer surface of the shaft and/or the inner surface the at least one roll mantle with a protective coating, such as a protective coating comprising a copper paste to reduce/prevent corrosion.

According to another embodiment of the invention the outer diameter of the shaft is reduced by 1.0-5.0% when worn and/or the inner diameter of the at least one roll mantle is increased by 1.0-5.0% when worn. A shaft having an outer diameter of 60-150 mm may for example be reduced by 2 mm when worn.

According to an embodiment of the invention sealing means are provided between the shaft and the at least one roll mantle. O-rings may for example be arranged at the outer ends of the at least one roll mantle to seal off the area between the outer surface of the shaft and the inner surface of the at least one roll mantle.

The present invention also concerns a method for exchanging at least one roll line in a continuous casting process, whereby the method comprises the step of removing at least one roll line, substituting the at least one roll line with an at least partly recycled roll line, i.e. a roll line comprising a shaft and/or at least one roll mantle that has been subjected to a method for extending its service life according to the present invention, and subjecting at least part of the at least one removed roll line, i.e. a shaft and/or at least one roll mantle of the at least one removed roll line to a method according to any of the embodiments of the present invention.

According to an embodiment of the invention the step of substituting the at least one roll line with an at least partly recycled roll line comprises the step of replacing bearings supporting the at least one roll line and/or shaft end connections.

### BRIEF DESCRIPTION OF THE DRAWINGS

The present invention will hereinafter be further explained by means of non-limiting examples with reference to the appended schematic figures where;
- Figure 1: shows a continuous casting process,
- Figure 2: shows a roll line according to an embodiment of the invention,
- Figure 3: shows a roll line according to another embodiment of the invention,
- Figure 4: shows the cross section of a roll line according to an embodiment of the invention,
- Figure 5: shows the inner diameters of a plurality of roll mantles and the outer diameters of a plurality of shafts to be used in a method according to the present invention, and
- Figure 6: is a flow diagram showing a method according to an embodiment of the invention.

It should be noted that the drawings have not been drawn to scale and that the dimensions of certain features have been exaggerated for the sake of clarity.

### DETAILED DESCRIPTION OF EMBODIMENTS

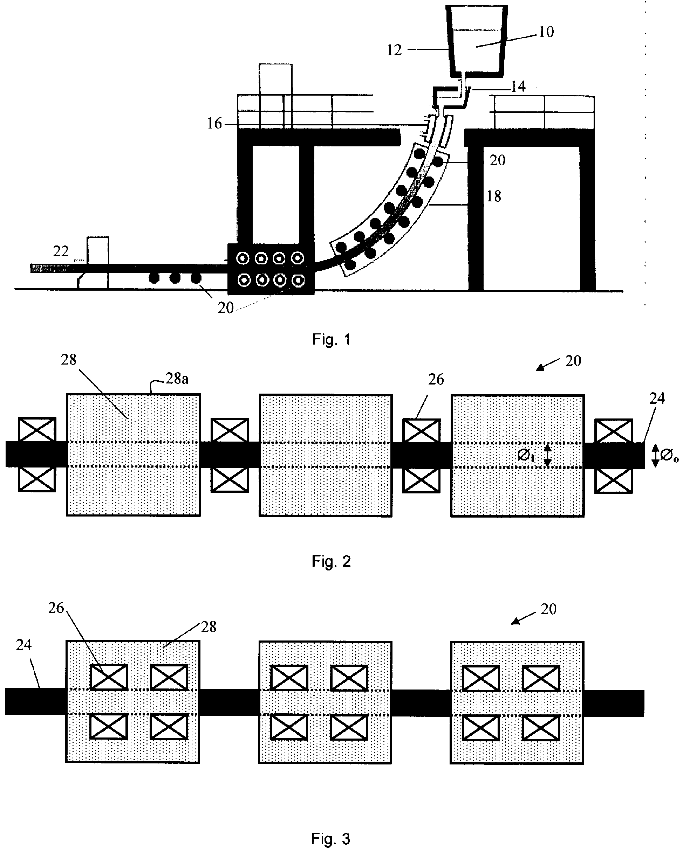

Figure 1 shows a continuous casting process in which molten metal 10 is tapped into a ladle 12. After undergoing any ladle treatments, such as alloying and degassing, and arriving at the correct temperature, molten metal 10 from the ladle 12 is transferred via a refractory shroud to a tundish 14. Metal is drained from the tundish 14 into the top of an open-base mould 16. The mould 16 is water-cooled to solidify the molten metal directly in contact with it. In the mould 16, a thin shell of metal next to the mould walls solidifies before the middle section, now called a strand, exits the base of the mould 16 into a cooling chamber 18; the bulk of metal within the walls of the strand is still molten. The strand is supported by closely spaced, water cooled roll lines 20 which act to support the walls of the strand against the ferrostatic pressure of the still-solidifying liquid within the strand. To increase the rate of solidification, the strand is sprayed with large amounts of water as it passes through the cooling chamber 18. Final solidification of the strand may take place after the strand has exited the cooling chamber 18.

In the illustrated embodiment the strand exits the mould 16 vertically (or on a near vertical curved path) and as it travels through the cooling chamber 18, the roll lines 20 gradually curve the strand towards the horizontal. (In a vertical casting machine, the strand stays vertical as it passes through the cooling chamber 18).

After exiting the cooling chamber 18, the strand passes through straightening roll lines (if cast on other than a vertical machine) and withdrawal roll lines. Finally, the strand is cut into predetermined lengths by mechanical shears or by travelling oxyacetylene torches 22 and either taken to a stockpile or the next forming process. In many cases the strand may continue through additional roll lines and other mechanisms which might flatten, roll or extrude the metal into its final shape.

Figure 2 shows a roll line 20 according to an embodiment of the present invention. The roll line 20 comprises a shaft 24 having an outer diameter Øₒ and supported by bearings 26 housed in bearing housings, and three roll mantles 28 for transporting a metal strand along the outer surface 28a thereof, having a corresponding inner diameter Øᵢ which are arranged to be fixedly supported on the shaft 24.

Figure 3 shows a roll line 20 according to another embodiment of the present invention. The roll line 20 comprises a non-rotating shaft 24 having an outer diameter Øₒ and three roll mantles 28 for transporting a metal strand along the outer surface 28a thereof, which roll mantles 28 having a corresponding inner diameter Øᵢ and are arranged to be rotatably supported on the shaft 24 by means of bearings 26 located inside the roll mantles 28.

Sealing means (not shown), such rubber seals, may be provided between the shaft 24 and the at least one roll mantle 28. It should be noted that a roll line 20 may comprise more components than those illustrated in the figures, such as mechanical couplings and optionally a lubrication system etc. However, only the features of relevance to the present invention have been illustrated for the sake of clarity.

The roll mantles 28 in the illustrated embodiments have been shown as hollow cylinders having a continuous and smooth outer surface 28a. It should however be noted that the at least one roll mantle of a roll line 20 according to the present invention need not necessarily be a cylinder or of a symmetric shape of uniform cross section, and its outer surface need not necessarily be continuous or smooth, but may be of any shape, size and design depending on their function and/or location in a continuous casting plant.

In the method for extending the service life of a roll line 20 according to the present invention the outer diameter Øₒ of the shaft 24 of the roll line 20 is reduced using a lathe and/or the inner diameter Øᵢ of at least one roll mantle of the roll line 20 is increased using a lathe when either the shaft and/or a roll mantle has reached a worn condition. The outer diameter of a shaft 24 may be reduced by 1.0-5.0% when worn and/or the inner diameter of a roll mantle 28 may be increased by 1.0-5.0% when worn.

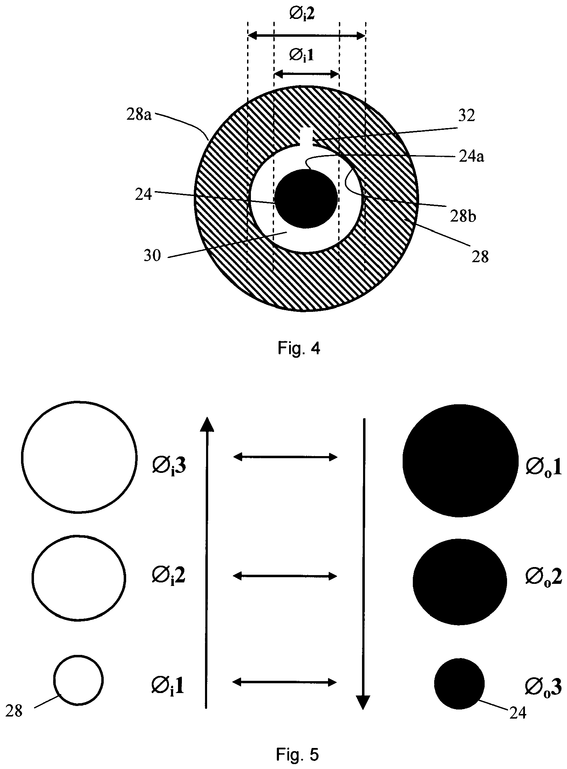

Figure 4 shows a roll mantle 28 of a roll line 20 whose inner diameter has been increased from Øᵢ1 to Øᵢ2. The original shaft 24 having an outer diameter corresponding to the initial inner diameter Øᵢ1 of the roll mantle 28 must be replaced with a shaft 24 having an outer diameter corresponding to the increased inner diameter Øᵢ2 of the roll mantle 28 so that the roll mantle 28 can be re-used. Alternatively, at least one component may be inserted in the gap 30 between a roll mantle 28 of increased internal diameter and a shaft 24 of reduced outer diameter. In this way either a shaft 24 or at least one roll mantle 28 of a roll line 20 may be re-used either with at least one roll mantle 28 of corresponding inner diameter or a shaft 24 of corresponding outer diameter respectively which have been subjected to a method for extending the service life of a roll line 20 according to the present invention or with a new roll mantle 28 or shaft 24 respectively.

According to an embodiment of the invention the outer surface 24a of the shaft 24 and/or the inner surface 28b the at least one roll mantle 28 may be at least partly coated with a protective coating, such as a protective coating comprises a copper paste.

The inner surface of at least one roll mantle 28 is provided with a groove 32 extending radially and longitudinally through a substantial part of the roll mantle 28. The at least one roll mantle 28 may be provided with such a groove 32 that is sufficiently deep radially to remain when the inner diameter of the roll mantle 28 has been increased. For example, if a roll mantle 28 is to be used in a total of four operational cycles whereby its inner diameter is reduced by 2mm after each operational cycle, the groove should have a depth of at least 8mm. Alternatively, a roll mantle 28 may be provided with a groove 32 each time the inner diameter of the roll mantle 28 is increased, or when necessary.

Figure 5 schematically shows how a roll mantle 28 having an initial internal diameter of Øᵢ1 may, when worn, be machined to have an internal diameter of Øᵢ2, re-used in a continuous casting process and then when worn again, be machined to have an internal diameter of Øᵢ3. A shaft 24 that has an initial outer diameter of Øₒ1, which is, when worn, machined to have an outer diameter of Øₒ2, re-used in a continuous casting process and then when worn again, be machined to have an outer diameter of Øₒ3. A re-cycled roll mantle 28 having a particular inner diameter Øᵢ1, Øᵢ2, Øᵢ3 may thus be used with a recycled shaft 24 of a corresponding outer diameter Øₒ3, Øₒ2, Øₒ1 respectively in a plurality of operational cycles.

The method for extending the service life of a roll line according to the present invention may be used any number of times as long as the at least one part of the roll line that is being subjected to the method still fulfils physical requirements.

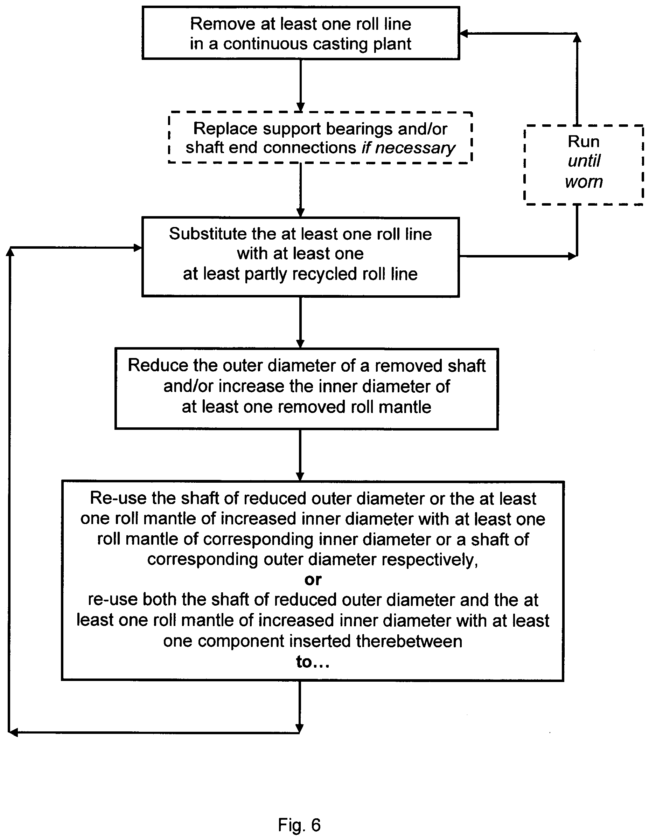

Figure 6 shows the steps of a method for exchanging at least one roll line in a continuous casting process according to an embodiment of the invention. The method comprises the step of removing at least one roll line and replacing the support bearings and/or shaft end connections if necessary (i.e. if the outer diameter of a shaft or the inner diameter of a roll mantle is to be changed). The at least one roll line is then substituted with an at least partly recycled roll line (i.e. a roll line with a shaft and/or at least one roll mantle that has/have been subjected to a method for extending the service life of a roll line according to the present invention). The continuous casting process may then by resumed until at least one roll line is worn or until an operator chooses to remove at least one roll line.

At least one part of the at least one removed roll line may then be subjected to a method for extending the service life of a roll line according to the present invention in which at the outer diameter of a removed shaft is reduced and/or the inner diameter of at least one removed roll mantle is increased. The shaft of reduced outer diameter or the at least one roll mantle of increased diameter may then be re-used in a continuous casting process together with at least one new or recycled roll mantle of corresponding inner diameter or a new or recycled shaft of corresponding outer diameter respectively to substitute an at least partly worn roll line. Alternatively, both the shaft of reduced outer diameter and the at least one roll mantle of increased diameter may be re-used in a continuous casting process together using at least one component inserted in the resulting gap between the shaft and the at least one roll mantle.

Further modifications of the invention within the scope of the claims would be apparent to a skilled person.

## Claims

1. Method for extending the service life of a roll line (20) used in a continuous casting process which roll line (20) comprises a shaft (24) having an outer diameter (Øₒ) and at least one roll mantle (28) having a corresponding inner diameter (Øᵢ) arranged to be supported on said shaft (24), whereby said method comprises the steps of reducing the outer diameter (Øₒ) of the shaft (24) using a lathe or increasing the inner diameter (Øᵢ) of the at least one roll mantle (28) using a lathe when worn, and re-using said shaft (24) of reduced outer diameter (Øₒ) or said at least one roll mantle (28) of increased inner diameter (Øᵢ) with at least one roll mantle (28) of corresponding inner diameter (Øᵢ) or a shaft (24) of corresponding outer diameter (Øₒ) respectively.

2. Method for extending the service life of a roll line (20) used in a continuous casting process which roll line (20) comprises a shaft (24) having an outer diameter (Øₒ) and at least one roll mantle (28) having a corresponding inner diameter (Øᵢ) arranged to be supported on said shaft (24), whereby said method comprises the steps of reducing the outer diameter (Øₒ) of the shaft (24) using a lathe or increasing the inner diameter (Øᵢ) of the at least one roll mantle (28) when worn using a lathe, and re-using said shaft (24) of reduced outer diameter (Øₒ) or said at least one roll mantle (28) of increased inner diameter (Øᵢ) together with at least one component inserted therebetween, or with at least one roll mantle (28) or a shaft (24) respectively with at least one component inserted therebetween, whereby said at least one component is used to compensate for said reduced outer diameter (Øₒ) of said shaft (24) or said increased inner diameter (Øᵢ) of said at least one roll mantle (28).

3. Method according to claim 1 or 2, whereby said method comprises the step of at least partly coating the outer surface (24a) of said shaft (24) or the inner surface (28b) of said at least one roll mantle (28) with a protective coating.

4. Method according to claim 3, whereby said protective coating comprises a copper paste.

5. Method according to any of the preceding claims, whereby said outer diameter (Øₒ) of said shaft (24) is reduced by 1.0-5.0% when worn or the inner diameter (Øᵢ) of the at least one roll mantle (28) is increased by 1.0-5.0% when worn.

6. Method according to any of claims 1-5, whereby said shaft (24) of reduced outer diameter (Øₒ) or said at least one roll mantle (28) of increased inner diameter (Øᵢ) is provided with a radial groove (32).

7. Method according to any of the preceding claims, whereby sealing means are provided between said shaft (24) and said at least one roll mantle (28).

8. Method for exchanging at least one roll line (20) in a continuous casting process, whereby said method comprises the step of removing at least one roll line (20), substituting the at least one roll line (20) with an at least partly recycled roll line (20) and subjecting at least one part (24, 28) of the at least one removed roll line (20) to a method according to any of the preceding claims.

9. Method according to claim 8, whereby the step of substituting the at least one roll line (20) with an at least partly recycled roll line (20) comprises the step of replacing bearings (26) supporting said at least one roll line (20) or shaft (24) end connections.

## Patentansprüche

1. Verfahren zur Verlängerung der Lebensdauer einer Walzlinie (20), welche bei einem Stranggussverfahren verwendet wird, welche Walzlinie (20) eine Welle (24) mit einem Außendurchmesser (Øₒ) und mindestens einen Walzenmantel (28) mit einem entsprechenden Innendurchmesser (Øᵢ) aufweist, welcher eingerichtete ist, um auf der Welle (24) getragen zu werden, wobei das Verfahren die Schritte des Reduzierens des Außendurchmessers (Øₒ) der Welle (24) unter Verwendung einer Drehmaschine oder des Vergrößerns des Innendurchmessers (Øᵢ) des mindestens einen Walzenmantels (28) unter Verwendung einer Drehmaschine bei Verschleiß und des Wiederverwendens der Welle (24) mit reduziertem Außendurchmesser (Øₒ) oder des mindestens einen Walzenmantels (28) mit vergrößertem Innendurchmesser (Øᵢ) mit jeweils mindestens einem Walzenmantel (28) mit entsprechendem Innendurchmesser (0i) oder einer Welle (24) mit entsprechendem Außendurchmesser (Øₒ) aufweist.

2. Verfahren zur Verlängerung der Lebensdauer einer Walzlinie (20), welche bei einem Stranggussverfahren verwendet wird, welche Walzlinie (20) eine Welle (24) mit einem Außendurchmesser (Øₒ) und mindestens einen Walzenmantel (28) mit einem entsprechenden Innendurchmesser (Øᵢ) aufweist, welcher eingerichtete ist, um auf der Welle (24) getragen zu werden, wobei das Verfahren die Schritte des Reduzierens des Außendurchmessers (Øₒ) der Welle (24) unter Verwendung einer Drehmaschine oder des Vergrößerns des Innendurchmessers (Øᵢ) des mindestens einen Walzenmantels (28) unter Verwendung einer Drehmaschine bei Verschleiß und des Wiederverwendens der Welle (24) mit reduziertem Außendurchmesser (Øₒ) oder des mindestens einen Walzenmantels (28) mit vergrößertem Innendurchmesser (Øᵢ) zusammen mit mindestens einer dazwischen eingefügten Komponente oder mit jeweils mindestens einem Walzenmantel (28) oder einer Welle (24) mit mindestens einer dazwischen eingefügten Komponente, wobei die mindestens eine Komponente verwendet wird, um den reduzierten Außendurchmesser (Øₒ) der Welle (24) oder den vergrößerten Innendurchmesser (Øᵢ) des mindestens einen Walzenmantels (28) zu kompensieren.

3. Verfahren nach Anspruch 1 oder 2, wobei das Verfahren den Schritt des zumindest teilweisen Beschichtens der äußeren Fläche (24a) der Welle (24) oder der Innenfläche (28b) des mindestens einen Walzenmantels (28) mit einer Schutzbeschichtung aufweist.

4. Verfahren nach Anspruch 3, wobei die Schutzbeschichtung Kupferpaste aufweist.

5. Verfahren nach einem der vorhergehenden Ansprüche, wobei der Außendurchmesser (Øₒ) der Welle (24) bei Verschleiß um 1,0-5,0% reduziert wird oder der Innendurchmesser (Øᵢ) des mindestens einen Walzenmantels (28) bei Verschleiß um 1,0-5,0% vergrößert wird.

6. Verfahren nach einem der Ansprüche 1-5, wobei die Welle (24) mit reduziertem Außendurchmesser (Øₒ) oder der mindestens eine Walzenmantel (28) mit vergrößertem Innendurchmesser (Øᵢ) mit einer radialen Nut (32) versehen wird.

7. Verfahren nach einem der vorhergehenden Ansprüche, wobei Dichtungsmittel zwischen der Welle (24) und dem mindestens einen Walzenmantel (28) vorgesehen werden.

8. Verfahren zum Austauschen von mindestens einer Walzlinie (20) bei einem Stranggussverfahren, wobei das Verfahren den Schritt des Entfernens von mindestens einer Walzlinie (20), des Ersetzens der mindestens einen Walzlinie (20) durch eine zumindest teilweise wieder aufbereitete Walzlinie (20) und des Unterziehens von mindestens einem Teil (24, 28) der mindestens einen entfernten Walzlinie (20) einem Verfahren nach einem der vorhergehenden Ansprüche aufweist.

9. Verfahren nach Anspruch 8, wobei der Schritt des Ersetzens der mindestens einen Walzlinie (20) durch eine zumindest teilweise wieder aufbereitete Walzlinie (20) den Schritt des Auswechselns von Lagern (26) aufweist, welche die mindestens eine Walzlinie (20) oder Endverbindungen der Welle (24) tragen.

## Revendications

1. Procédé de prolongation de la durée de vie d'une ligne (20) à rouleaux utilisée dans une opération de coulée continue,
la ligne (20) à rouleaux comprenant un arbre (24) d'un diamètre extérieur (Øₒ) et au moins un manteau de rouleau (28) présentant un diamètre intérieur (Øᵢ) et agencé de manière à être soutenu sur ledit arbre (24),
ledit procédé comportant les étapes qui consistent à en cas d'usure, réduire le diamètre extérieur (Øₒ) de l'arbre (24) en utilisant un tour ou augmenter le diamètre intérieur (Øᵢ) du ou des manteaux de rouleau (28) en utilisant un tour et réutiliser ledit arbre (24) de diamètre extérieur (Øₒ) réduit ou ledit ou lesdits manteaux de rouleau (28) de diamètre intérieur (Øᵢ) agrandi respectivement avec au moins un manteau de rouleau (28) dont le diamètre intérieur (Øᵢ) correspond ou un arbre (24) dont le diamètre extérieur (Øₒ) correspond.

2. Procédé de prolongation de la durée de vie d'une ligne (20) à rouleaux utilisée dans une opération de coulée continue,
la ligne (20) à rouleaux comprenant un arbre (24) d'un diamètre extérieur (Øₒ) et au moins un manteau de rouleau (28) présentant un diamètre intérieur (Øᵢ) et agencé de manière à être soutenu sur ledit arbre (24),
ledit procédé comportant les étapes qui consistent à en cas d'usure, réduire le diamètre extérieur (Øₒ) de l'arbre (24) en utilisant un tour ou augmenter le diamètre intérieur (Øᵢ) du ou des manteaux de rouleau (28) en utilisant un tour et réutiliser ledit arbre (24) de diamètre extérieur (Øₒ) réduit ou ledit ou lesdits manteaux de rouleau (28) de diamètre intérieur (Øᵢ) agrandi en même temps qu'au moins un composant inséré entre eux, ou
avec au moins un manteau de rouleau (28) ou un arbre (24), respectivement, avec au moins un composant inséré entre eux, ledit ou lesdits composants étant utilisés pour compenser ladite réduction du diamètre extérieur (Øₒ) dudit arbre (24) ou ladite augmentation du diamètre intérieur (Øᵢ) dudit ou desdits manteaux de rouleau (28).

3. Procédé selon les revendications 1 ou 2, dans lequel ledit procédé comprend l'étape qui consiste à revêtir au moins une partie de la surface extérieure (24a) dudit arbre (24) ou la surface intérieure (28b) dudit ou desdits manteaux de rouleau (28) par un revêtement protecteur.

4. Procédé selon la revendication 3, dans lequel ledit revêtement protecteur comprend une pâte au cuivre.

5. Procédé selon l'une quelconque des revendications précédentes, dans lequel ledit diamètre extérieur (Øₒ) dudit arbre (24) est réduit de 1,0 à 5,0 % en cas d'usure ou dans lequel le diamètre intérieur (Øᵢ) dudit ou desdits manteaux de rouleau (28) est augmenté de 1,0 à 5,0 % en cas d'usure.

6. Procédé selon l'une quelconque des revendications 1 à 5, dans lequel ledit arbre (24) de diamètre extérieur (Øₒ) réduit ou ledit ou lesdits manteaux de rouleau (28) de diamètre intérieur (Øᵢ) augmenté sont dotés d'une rainure radiale (32).

7. Procédé selon l'une quelconque des revendications précédentes, dans lequel des moyens de scellement sont prévus entre ledit arbre (24) et ledit ou lesdits manteaux de rouleau (28).

8. Procédé de remplacement d'au moins une ligne (20) à rouleaux d'une opération de coulée continue, ledit procédé comportant l'étape qui consiste à retirer au moins une ligne (20) de rouleau, à remplacer ladite ou lesdits lignes (20) de rouleau par une ligne (20) de rouleau partiellement recyclée et à appliquer sur au moins une partie (24, 28) de la ou des lignes (20) à rouleaux retirée un procédé selon l'une quelconque des revendications précédentes.

9. Procédé selon la revendication 8, dans lequel l'étape de remplacement de la ou des lignes (20) à rouleaux par une ligne (20) à rouleaux recyclée au moins en partie comprend l'étape qui consiste à remplacer les paliers (26) qui soutiennent ladite ou lesdites lignes (20) à rouleaux ou les raccords d'extrémité des arbres (24).
